# EUROPEAN PATENT APPLICATION

(11) **EP 4 647 824 A1**
(43) Date of publication of application: **12.11.2025**
(21) Application number: 25174310.0
(22) Date of filing: 05.05.2025
(51) Int. Cl.: G02B 6/44, G02B 6/50

(54) **FLOOD RESISTANT OPTICAL FIBER ENCLOSURE**

(30) Priority: 06.05.2024 IN 202411035727
(71) Applicant: Sterlite Technologies Limited, Gurugram, Haryana 122102 (IN)
(72) Inventor: Kumar, Shantha, 122102 Gurugram, Haryana (IN)
(74) Representative: Petraz, Gilberto Luigi

(57) **Abstract**

The present disclosure provides an optical fiber enclosure (102) with a base unit (106) defined by one or more walls (1110, 1112) having a burying end (1204) and a connection end (1202), a top casing (402) defined by one or more top walls (202-208) forming an open end (606) and a closed end (602). The open end of the top casing is removably engaged to the connection end (1202) of the base unit. The burying end is an open end and is configured for subterranean placement beneath a land surface.. Further, the top casing has an optical storage compartment (404) that is devoid of any apertures through the closed end (602) so as to preserve the optical storage compartment integrity against water ingress until submerged, while maintaining the open end of the top casing.

## Description

### TECHNICAL FIELD

Embodiments of the present disclosure relate to the field of wireless communication networks, and in particular, relates to the optical fiber enclosure for protecting fiber optical cables and an equipment associated with the fiber optical cables within the optical fiber enclosure from contaminants.

The present application claims the benefit of Indian Application No. 202411035727 titled "FLOOD RESISTANT OPTICAL FIBER ENCLOSURE" filed by the applicant on May 6, 2024**,** which is incorporated herein by reference in its entirety.

### Background Art

An optical fiber network finds its presence in every region across the globe. The optical fiber network supports world-wide communication systems and ensures uninterrupted services related to voice calls, internet and the like. Optical fiber cables are the foundation for the optical fiber networks and link one optical fiber network to another optical fiber network. The optical fiber cables comprise optical transmission elements, i.e., optical fibers, that are responsible for linking the optical fiber networks.

Fiber optic communication systems deliver high bandwidth communication capabilities to customers. Optical fiber connectors are an important part of most fiber optic communication systems that allow two optical fibers to be quickly, optically connected without requiring a splice. Further, the fiber optic connectors can be used to optically interconnect two lengths of optical fiber. Also, can be used to interconnect lengths of optical fiber to passive and active equipment.

There is an ever-increasing demand for high-speed or high-bandwidth communication channels for delivering high-speed data and video services. To meet this demand, telecommunications service providers are developing networks (sometimes referred to as outside plant networks) that extend the higher bandwidth of fiber optic components all the way to the end-user businesses and homes (referred to as premises). In such networks, there are distribution points where a distribution, feeder or branch cable is interconnected with one or more drop cables that are routed to the premises. At such distribution points, the side coming from the service provider is generally referred to as the central office or CO side while the side leading to the premises is generally referred to as the drop side. A distribution, branch or feeder cable typically includes a sheath surrounding a plurality of buffer tubes with each buffer tube housing a plurality of optical fibers.

Enclosures are used to house fiber optic cable interconnections and splices and certain fiber optic components (e.g., splitters and couplers) at various locations in a fiber optic network. Existing fiber optic enclosures, however, are not well suited for use at distribution points close to the end-user premises. Technicians will have to access the interior of the enclosures at such distribution points on a fairly regular basis to add new splices for the premises of additional subscribers or to disconnect service to subscribers cancelling service. Vault-type enclosures that are buried in the ground are one type of enclosure commonly used in fiber optic networks. Such vaults are thought to be necessary to protect the integrity of the optical fibers and splices. However, to gain access to the splices in the vault, a bulky lid with multiple bolts must be removed and a sealed splice case, also with multiple fasteners and cable sealing provisions, removed from the interior of the vault. As a result, accessing and servicing such vaults is time-consuming, and thus expensive, making them unsuitable for use at distribution points close to premises that will have to be accessed by technicians on a regular basis.

A variety of fiber optical cables and equipment(s) associated with the fiber optical cables are located in an optical fiber enclosure. Typically, a base of the optical fiber enclosure is buried under the ground, and an upper portion of the optical fiber enclosure is positioned above the ground. There is a need to protect the fiber optical cables and the equipment(s) associated with the fiber optical cables within the optical fiber enclosure from contaminants, such as weather, water, debris, rodents and animals especially for the terrains where flood events happen often and water level can rise beyond a height of the optical fiber enclosure.

US patent Application "US2005207711A1" describes a pedestal unit with a base and a cover assembly. The pedestal unit includes a plate for entering and exiting optical fibers.

Another US patent Application "US7526173B2" describes a pedestal unit with a base and a cover assembly. A bracket is mounted on walls of a base assembly to mount other optical fiber components.

Yet another US patent Application "US5117067A" describes a pedestal unit with a base and a cover assembly. The pedestal includes a rigid plate member for mounting termination blocks.

Yet another US patent Application "US7728224B2" describes a pedestal unit with a base and a cover assembly. A bracket is mounted on walls of the base to mount other optical fiber components.

Yet another US patent Application "US7193151B2" describes a pedestal unit with a base and a cover assembly. A bracket is mounted on the walls of the base assembly to mount other optical fiber components.

Yet another US patent Application "US7038127B2" discloses about a pedestal enclosure for electronic components, where the pedestal enclosure includes a base section and a cover engageable with the base section so as to define an interior space. The pedestal enclosure further includes a mounting arrangement for releasably mounting a bracket system to the base section.

Yet another US patent Application "US7274850B2" discloses about enclosures for housing optical fiber interconnections at distribution points in a fiber optic network.

Yet another US patent Application "US7418183B2" discloses about a fiber optic splice enclosure for housing an interconnection contained in a splice tray between at least one optical fiber of a feeder cable and at least one optical fiber of a drop cable.

Other types of enclosures used in fiber optic networks have similar issues and drawbacks. For instance, despite being installed above-ground, accessing the interior of many pedestal-type enclosures can be quite awkward. Removal and replacement of the cover on the pedestal is a particular problem. Moreover, many pedestal enclosures have complicated cable management systems. These enclosures are also relatively inflexible in their set-up making them difficult or impossible to optimize for the needs of a specific application

While the prior arts cover various solutions to protect the fiber optical cables and the equipment associated with the fiber optical cables within the optical fiber enclosure from contaminants, there still remains a scope for improvement.

Accordingly, to overcome the disadvantages of the prior arts, there is a need for a technical solution that overcomes the above-stated limitations in the prior arts. The present invention provides an optical fiber enclosure for protecting fiber optical cables and an equipment associated with the fiber optical cables within the optical fiber enclosure from contaminants.

### SUMMARY OF THE DISCLOSURE

Embodiments of the present invention relates to an optical fiber enclosure comprising a base unit defined by one or more walls having a burying end and a connection end, a top casing defined by one or more top walls forming an open end and a closed end. In particular, the open end of the top casing is removably engaged to the connection end of the base unit. Moreover, the top casing has an optical storage compartment, wherein the optical storage compartment is devoid of any apertures through the closed end so as to preserve integrity of the optical storage compartment against water ingress until submerged, while maintaining the open end of the top casing.

According to the first aspect of the present disclosure, a height of the optical fiber enclosure above the land surface is less than 750 mm, so as to ensure sustained integrity of the optical storage compartment against water intrusion until submerged to a height exceeding 25mm above the land surface.

According to the second aspect of the present disclosure, the base unit includes a burying level indicator. In particular, the burying level indicator is configured as a visual indicator comprising one more markings indicating an optimal depth for burying the base unit. Further, the base unit includes an extended region configured to interlock with the top casing.

According to the third aspect of the present disclosure, the top casing is an extruded component, so as to provide resilience against external hydrostatic pressures when submerged. In particular, the top casing is defined by a wall thickness of 1 mm to 5 mm and made of a non-permeable thermoplastic material to ensure structural integrity under submerged conditions. The closed end of the top casing includes a top cover integrally bonded with the one or more top walls thereby establishing a hermetic seal. Moreover, the top cover has a peripheral channel into which edges of the top walls are engaged and bonded. Further, the top casing includes a pressure relief valve to regulate internal pressure within the optical storage compartment when submerged underwater.

According to the fourth aspect of the present disclosure,, the optical fiber enclosure includes a peripheral sealing element.In particular, the peripheral sealing element includes a compressed polymer engineered to exert upward force on the top casing during decoupling from the base unit, thereby facilitating the lifting of the top casing.

According to the fifth aspect of the present disclosure, an optical fiber enclosure for protecting fiber optical cables and equipment(s) associated with the fiber optical cables within the optical fiber enclosure from contaminants, such as weather, water, debris, rodents and animals.

According to the sixth aspect of the present disclosure, an optical fiber enclosure that can be partially buried into the ground protect optical fiber components present inside, in case a water level rises beyond a height of the optical fiber enclosure such as a flood event.

### BRIEF DESCRIPTION OF DRAWINGS

To describe the technical solutions in the embodiments of the present disclosure or in the prior art more clearly, the following briefly describes the accompanying drawings required for describing the embodiments or the prior art. Apparently, the accompanying drawings in the following description merely show some embodiments of the present disclosure, and a person of ordinary skill in the art can derive other implementations from these accompanying drawings without creative efforts. All of the embodiments or the implementations shall fall within the protection scope of the present disclosure.
FIG. 1 is a pictorial snapshot illustrating a perspective view of an optical fiber enclosure in accordance with an embodiment of the present disclosure.
FIG. 2 is a pictorial snapshot illustrating a perspective view of a top shell of the optical fiber enclosure in accordance with an embodiment of the present disclosure;
FIG. 3 is a pictorial snapshot illustrating a bottom perspective view of a top cover of the optical fiber enclosure in accordance with an embodiment of the present disclosure;
FIG. 4 is a pictorial snapshot illustrating an upside down view of a top casing in accordance with an embodiment of the present disclosure;
FIG. 5 is a pictorial snapshot illustrating a sectional view of the top casing in accordance with an embodiment of the present disclosure;
FIG. 6 is a pictorial snapshot illustrating another front perspective view of the top casing in accordance with an embodiment of the present disclosure;
FIG. 7 is a pictorial snapshot illustrating another front perspective view of the top casing including an auto-lock access hole, holes and a striker pin insert molded assembly in accordance with an embodiment of the present disclosure;
FIG. 8 is a pictorial snapshot illustrating a cross sectional perspective view of various elements in a base unit of the fiber optic enclosure in accordance with an embodiment of the present disclosure;
FIG. 9 is a pictorial snapshot illustrating a cross-sectional perspective view of a striker-lock pin of the top casing engaged with an auto-lock receiver of the base unit in accordance with an embodiment of the present disclosure;
FIG. 10 is a pictorial snapshot illustrating a perspective view of the base unit of the optical fiber enclosure in accordance with an embodiment of the present disclosure;
FIG. 11 to FIG. 14 are pictorial snapshot illustrating perspective views of the base unit in various configurations in accordance with an embodiment of the present disclosure;
FIG. 15 is a pictorial snapshot illustrating sectional exploded views of an anchoring stake module integrated with the base unit in accordance with an embodiment of the present disclosure;
FIG. 16 is a pictorial snapshot illustrating a perspective view of the base unit with an auto-lock unit in accordance with an embodiment of the present disclosure;
FIG. 17 and FIG. 18 are pictorial snapshot illustrating top perspective views of a primary chassis plate attached with a reinforcement metal plate in accordance with embodiments of the present disclosure;
FIG. 19 is a pictorial snapshot illustrating a front perspective view of the base unit having the primary chassis plate integrated therein in accordance with embodiments of the present disclosure;
FIG. 20 to FIG. 21 are pictorial snapshot illustrating perspective views of the primary chassis plate with various elements in accordance with embodiments of the present disclosure;
FIG. 22 is a pictorial snapshot illustrating a perspective view of a flat/round drop cable assembly module in accordance with an embodiment of the present disclosure;
FIG. 23 is a pictorial snapshot illustrating a perspective view of the primary chassis plate locating and securing a looped mounting frame in accordance with an embodiment of the present disclosure;
FIG. 24 is a pictorial snapshot illustrating a perspective view of the looped mounting frame with various elements in accordance with an embodiment of the present disclosure;
FIG. 25 is a pictorial snapshot illustrating an exploded perspective view of the looped mounting frame integrated with the base unit holding an optical component in accordance with an embodiment of the present disclosure;
FIG. 26 is a pictorial snapshot illustrating another exploded perspective view of the base unit holding the looped mounting frame with various optical components in accordance with an embodiment of the present disclosure; and
FIG. 27 is a pictorial snapshot illustrating a sectional view of the optical fiber enclosure including a burying level indicator in accordance with an embodiment of the present disclosure.

- 100: Perspective view of optical fiber enclosure
- 102: Optical fiber enclosure
- 104: Top shell
- 106: Base unit)
- 108: Top cover
- 110: Burying level indicator
- 112: One or more markings
- 200: Perspective view of top shell
- 202-208: Top walls
- 210-216: Curved corners
- 220-226: Edges
- 300: Perspective bottom view of top cover
- 302: Peripheral channel (or U-shaped profile channel)
- 400: Upside down view of top casing
- 402: Top casing
- 404: Optical storage compartment (or top compartment)
- 500: Cross sectional view of top casing
- 600: Front perspective view of top casing
- 602: Closed end
- 604: Volumetric space
- 606: Female open end
- 608: Striker-lock pin
- 700: Front perspective view of top casing
- 702: Auto-lock access hole
- 704, 706: Holes for mounting the striker-lock pin
- 708, 712: Fasteners passing through the holes
- 714: Striker-lock assembly
- 800: Cross sectional perspective view of base unit showing various elements
- 802: Rubber sealing cap
- 804: Auto-lock hexagon part
- 806: Peripheral sealing element (compressed polymer sealing element or push rubber spring sealing element)
- 808: Auto-lock receiver to receive the striker-lock pin of the top casing
- 810: Auto-lock bumper rubber
- 812: Access hole
- 814: Extended region
- 900: Cross-sectional perspective view showing the striker-lock pin of the top casing engaged with an auto-lock receiver unit of the base unit
- 1000: Perspective view of base unit
- 1002: Male hinge feature
- 1004: Female hinge feature
- 1006: Male interlock face
- 1008: Female interlock face
- 1100: Perspective view of base unit
- 1102: Male hinge
- 1104: Female hinge
- 1106, 1108: Shell
- 1110, 1112: Wall
- 1114: Vertical edges
- 1116: Base compartment
- 1118: Mounting holes for spacer bolt
- 1200: Top front perspective view of base unit
- 1202: Connection end
- 1204: Burying end
- 1206: Hinge means (i.e., Hinge pin)
- 1300: Front perspective view of base unit
- 1302: RTV silicone applied on or forming a male interlock face and a female interlock face
- 1400: Front perspective view of base unit
- 1402: Anchoring bolt holes
- 1404: Bottom flange
- 1406, 1408: Ribs
- 1500: Sectional exploded view of anchoring stake module
- 1502: Anchoring stake module (or Grounding kit)
- 1504: U-shaped channel
- 1506: C-shaped sheet metal bracket
- 1508: Flanged hexagonal nuts
- 1510: Washer
- 1512: Spacer bolt
- 1514: External thread
- 1600: Front perspective view of base unit with auto-lock unit
- 1602: Recessed pocket feature for auto-lock receiver unit
- 1700: Top perspective view of primary chassis plate attached with reinforcement metal plate
- 1702: Tapered guide lead-in features
- 1704, 1706, 1708, 1710: One or more recess
- 1712: Threaded brass inserts
- 1800: Exploded perspective view of primary chassis plate attached with reinforcement metal plate
- 1802: Reinforcement metal plate
- 1804: Primary chassis plate
- 1900: Front perspective view of base unit having primary chassis plate integrated therein
- 1904: One or more attachment mechanisms for mounting the primary chassis plate
- 2000: Perspective view of primary chassis plate with various elements
- 2002: Grounding bracket
- 2004: Holding member (i.e., Threaded fastener)
- 2006: L shaped member (L shaped brackets)
- 2100: Perspective view of primary chassis plate with various elements
- 2102: Optical fiber cable(s)
- 2104: Cable clamp and mounting brackets (solid stop cable clamp mounting brackets or one or more cable clamp)
- 2106, 2108: Solid stop member (i.e., Solid stop cable clamp)
- 2200: Perspective view of flat/round drop cable assembly module
- 2201: Drop cable assembly module
- 2202: Drop cable bracket assembly
- 2204, 2208: Side plates (i.e., right side mount bracket and left side mount bracket)
- 2206: Drop cable tie bracket
- 2210: Drop cable FRP bracket
- 2212: One or more fiber strength members (Fiber-reinforced plastic rods or wires)
- 2214: Optical fiber loose tubes
- 2300: Perspective view of primary chassis plate locating and securing a looped mounting frame
- 2302: Horizontal mount plate
- 2310: Looped mounting frame
- 2312: Fastening means
- 2400: Perspective view of looped mounting frame with various elements
- 2402: Unite bracket plate
- 2404: Looped mounting frame equal halves
- 2406, 2408: Two parallel arms
- 2500: Exploded perspective view of looped mounting frame integrated with base unit
- 2502: Storage module
- 2600: Exploded perspective view of base unit holding looped mounting frame with various optical components
- 2602: Splice tray
- 2604: Splice tray hub
- 2606: Splice tray module
- 2700: Sectional view of the optical fiber enclosure
- 2702: Burying depth

The optical fiber is illustrated in the accompanying drawings, which like reference letters indicate corresponding parts in the various figures. It should be noted that the accompanying figure is intended to present illustrations of exemplary embodiments of the present disclosure. This figure is not intended to limit the scope of the present disclosure. It should also be noted that the accompanying figure is not necessarily drawn to scale.

### DESCRIPTION OF EMBODIMENTS

Those skilled in the art will be aware that the present disclosure is subject to variations and modifications other than those specifically described. It is to be understood that the present disclosure includes all such variations and modifications. The disclosure also includes all such steps, features, compositions and compounds referred to or indicated in this specification, individually or collectively, and any and all combinations of any or more of such steps or features.

### Definitions:

For convenience, before further description of the present disclosure, certain terms employed in the specification, and examples are collected here. These definitions should be read in the light of the remainder of the disclosure and understood as by a person of skill in the art. The terms used herein have the meanings recognized and known to those of skill in the art, however, for convenience and completeness, particular terms and their meanings are set forth below.

The articles "a", "an" and "the" are used to refer to one or to more than one (i.e., to at least one) of the grammatical object of the article.

The terms "comprise" and "comprising" are used in the inclusive, open sense, meaning that additional elements may be included. It is not intended to be construed as "consists of only". Throughout this specification, unless the context requires otherwise the word "comprise", and variations such as "comprises" and "comprising", will be understood to imply the inclusion of a stated element or step or group of element or steps but not the exclusion of any other element or step or group of element or steps.

### The following brief definition of terms shall apply throughout the present disclosure:

Term "optical fiber" as used herein refers to a light guide that provides high-speed data transmission. The optical fiber has one or more glass core regions and one or more glass cladding regions. The light moving through the glass core regions of the optical fiber relies upon the principle of total internal reflection, where the glass core regions have a higher refractive index (n1) than the refractive index (n2) of the glass cladding region of the optical fiber.

In accordance with an embodiment of the present disclosure an optical fiber enclosure includes a base unit defined by one or more walls having a burying end and a connection end. The burying end is an open end and is configured for subterranean placement beneath a land surface. Further, the optical fiber enclosure includes a top casing defined by one or more top walls forming an open end and a closed end. The open end of the top casing is removably engaged to the connection end of the base unit. The top casing has an optical storage compartment is devoid of any apertures through the closed end so as to preserve integrity of the optical storage compartment against water ingress until submerged, while maintaining the open end of the top casing.

In accordance with an embodiment of the present disclosure, height of the optical fiber enclosure above the land surface is less than 750 mm, so as to ensure sustained integrity of the optical storage compartment against water intrusion until submerged to a height exceeding 25mm above the land surface.

In accordance with an embodiment of the present disclosure, the base unit includes a burying level indicator configured as a visual indicator comprising one more markings indicating an optimal depth for burying the base unit. The base unit includes an extended region configured to interlock with the top casing.

In accordance with an embodiment of the present disclosure, the top casing is an extruded component, so as to provide resilience against external hydrostatic pressures when submerged. In particular, the top casing is defined by a wall thickness of 1 mm to 5 mm and made of a non-permeable thermoplastic material to ensure structural integrity under submerged conditions. Moreover, the closed end of the top casing includes a top cover integrally bonded with the one or more top walls thereby establishing a hermetic seal. Further, the top cover has a peripheral channel into which edges of the top walls are engaged and bonded. The top casing includes a pressure relief valve to regulate internal pressure within the optical storage compartment when submerged underwater.

In accordance with an embodiment of the present disclosure,, the optical fiber enclosure includes a peripheral sealing element, wherein the peripheral sealing element includes a compressed polymer engineered to exert upward force on the top casing during decoupling from the base unit, thereby facilitating the lifting of the top casing.

In accordance with an embodiment of the present disclosure, the optical fiber enclosure is related to a fiber pedestal unit to store optical fibers and provides environmental protection to the stored optical fibers. In the optical fiber enclosure, a looped mounting frame is supported by a bottom bar over a primary chassis plate, so as to provide additional strength to the optical fiber enclosure. A top casing and a base unit are formed by extrusion process; hence, it reduces manufacturing cost as well. The chassis plate is sealed with a primary rubber seal and a secondary rubber seal on a side of the chassis plate at a periphery of the chassis plate. The design of the optical fiber enclosure uses a cross bracket allowing a plurality of components configurations inside a housing of the optical fiber enclosure in a cost effective manner. The proposed invention addresses the problems associated with large sized enclosures and high density small enclosures. In accordance with an embodiment of the present disclosure, the optical fiber enclosure of the present disclosure is easy to install and provides easy and enhanced accessibility of the one or more optical fiber cables in a buried part of a high density enclosure.

In accordance with an embodiment of the present disclosure, the optical fiber enclosure includes an auto-lock feature while installing the top casing over the base unit. In particular, the top casing and the base unit allow for efficient utilization of space, accommodating larger components within a smaller footprint compared to circular designs of existing enclosure. Moreover,he auto-lock feature includes a bolt with spring leaf which gets pushed inside while installing the top casing and once the top casing is in-place, the bolt gets inserted into the holes inside the top casing. When someone wants to remove the top casing, a seal cap for auto-lock access port (which is concealed by the seal cap) must be removed and locking bolt has to be open by using a tool. Hence, the optical fiber enclosure is easy to operate. Further, the optical fiber enclosure has a flood resistant proof feature and a leak proof feature.

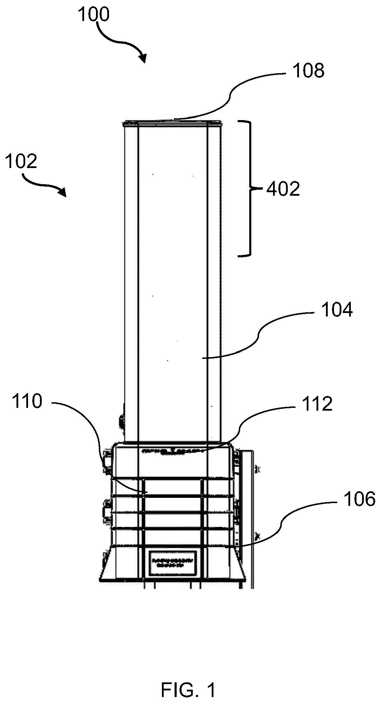

FIG. 1 is a pictorial snapshot illustrating a perspective view (100) of the optical fiber enclosure (102). The optical fiber enclosure (102) is also called as an optical termination pedestal, a pedestal enclosure, a fiber access terminal, and a fiber pedestal. The optical fiber enclosure (102) is used at a branch point in a fiber optic communications network.

In accordance with an embodiment of the present disclosure, the optical fiber enclosure (102) includes a top shell (104), a base unit (106), and a top cover (108). In particular, the top shell (104) is a hollow body positioned over the base unit (106), and is covered by the top cover (108).

The optical fiber enclosure (102) includes a burying level indicator (110) made as an indicia on an external surface of the base unit (106). In particular, the burying level indicator (110) is configured as a visual indicator comprising one or more markings (112) indicating an optimal depth for burying the base unit (106). Moreover, the burying level indicator (110) enhances flood resistance by ensuring proper positioning of the optical fiber enclosure (102) within a land surface (or soil). Further, the burying level indicator (110) enables installers to achieve uniform burial depths for multiple enclosures, ensuring consistent flood resistance across a fiber optic communications network. The burying level indicator (110) promotes reliability and resilience in flood-prone areas.

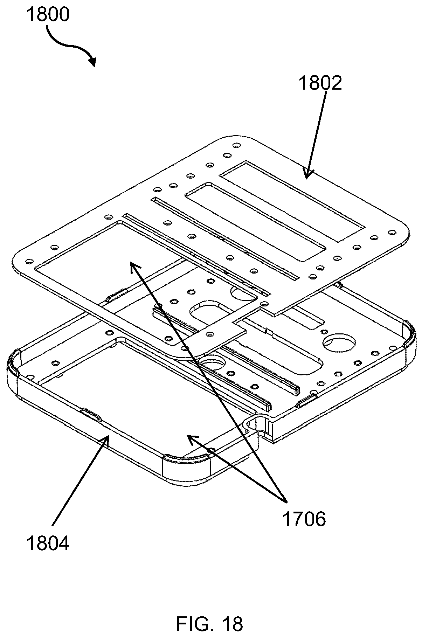

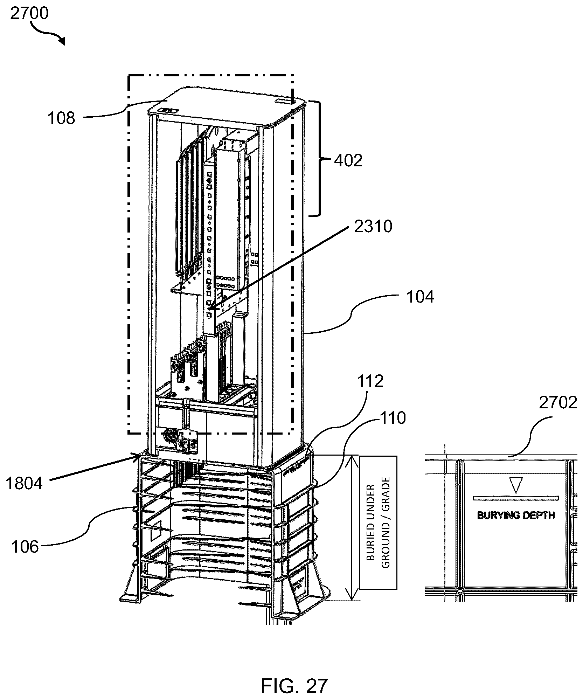

In accordance with an embodiment of the present disclosure,, the base unit (106) is buried below the ground (below grade) upto an indicated level marked permanently on the base unit (106), so that an optical region and its components are sufficiently placed above a burying depth (2702) (as shown in FIG. 27) inside of the optical fiber enclosure (102). When a water level during flooding rises on the land surface and around an unburied region of the optical fiber enclosure (102), air is trapped in a cavity around the optical region inside a top casing (402). Hence, the trapped air does not permit water to enter into a hollow region of the top casing (402) beyond a primary chassis plate (1804) (as shown in FIG. 18), thereby protecting all the elements which manage the optical fiber cables, optical fibers and accessories that manage the routing. Since the top casing (402) has an air leak proof feature and preserves the air inside the buried optical fiber enclosure (102), it is difficult for the water to displace the air out once the optical fiber enclosure (102) is buried, installed and locked.

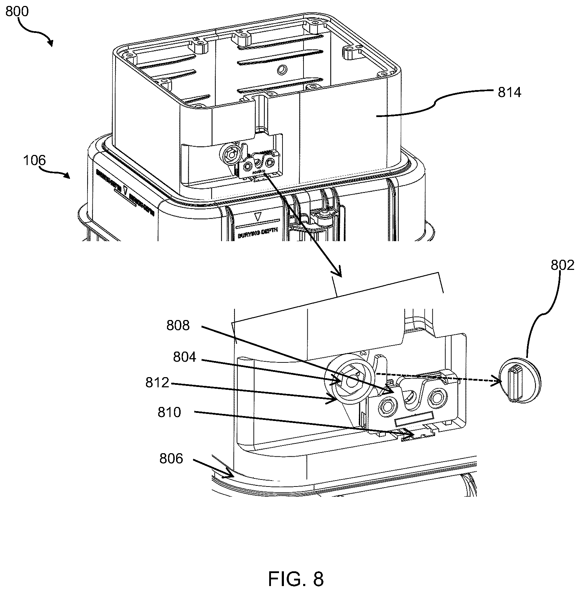

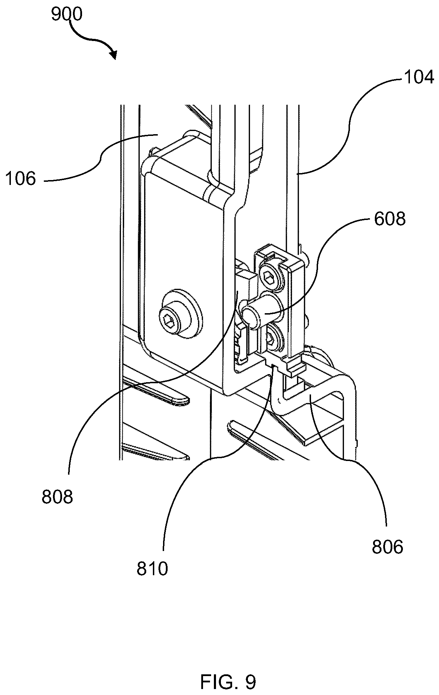

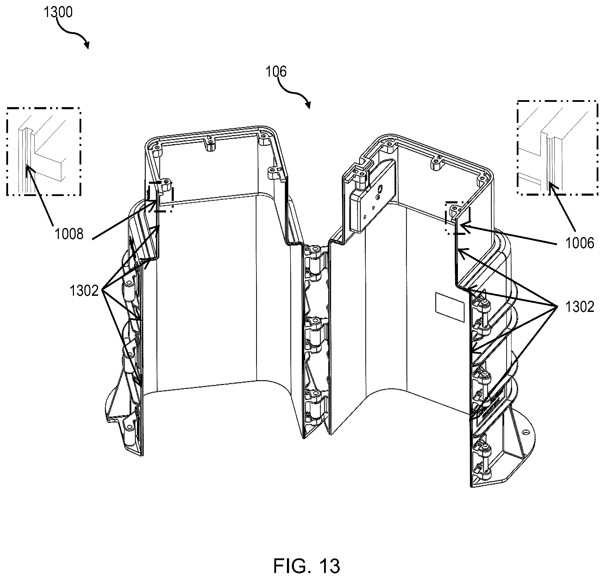

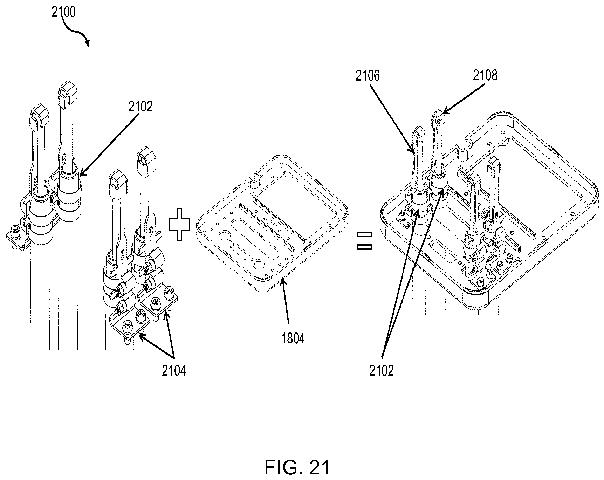

The various elements in the base unit (106) are further elaborated below in conjunction with FIG. 8 to FIG. 26.

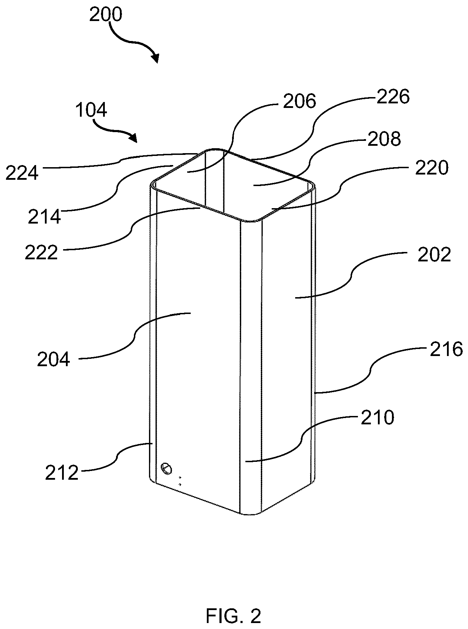

FIG. 2 illustrates a perspective view (200) of the top shell (104) of a top casing (402) of the optical fiber enclosure (102). A rectangular cross section profile of the top shell (104) includes four top walls (202-208) and four curved corners (210-216) to form the top shell (104) by processes including, but not limited to, plastic extrusion processes, injection molding processes, roto-molding processes, and blow molding processes.

In accordance with an embodiment of the present disclosure,, the four top walls (202-208) are integrally bonded with the top cover (108) so as to establish a hermetic seal to withstand pressure and ensure watertight seal. The hermetic seal prevents water ingress, creates an airtight and watertight barrier, and seals off the enclosure from floodwaters and external environment. The hermetic seal ensures that internal components of the optical fiber enclosure (102) remain protected from moisture and water infiltration, even in the event of flooding.

In accordance with an embodiment of the present disclosure, shape of the top shell (104) and hence, the top casing (402) may be rectangular or square to accommodate larger sized optical components such as Connectorized Block Terminals (CBT) in lesser area while a circular top unit requires more space as compared to the top casing (402). The CBT is a fiber drop terminal which receives an input cable and provides a plurality of output drop cables.

Alternatively, the shape of the top casing (402) may vary based on the requirement, usage and application.

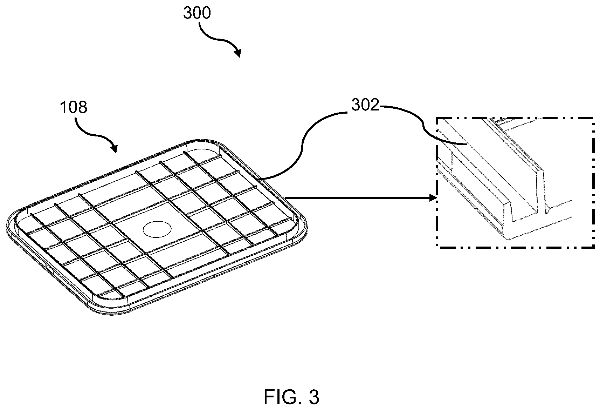

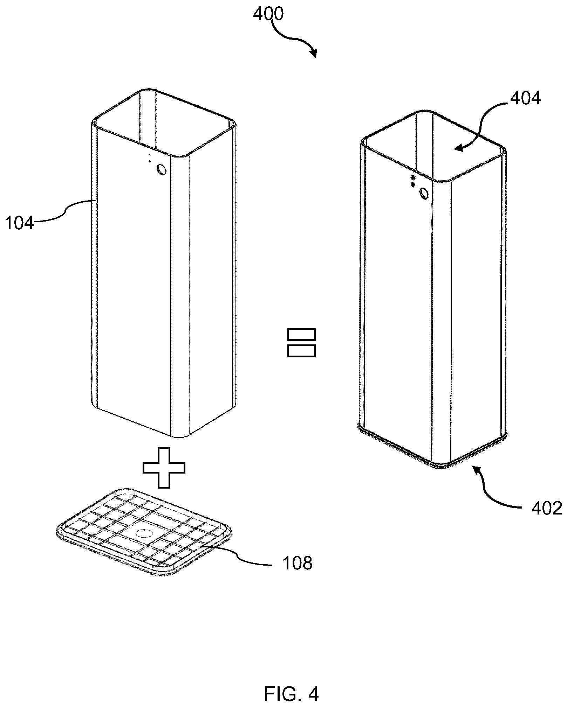

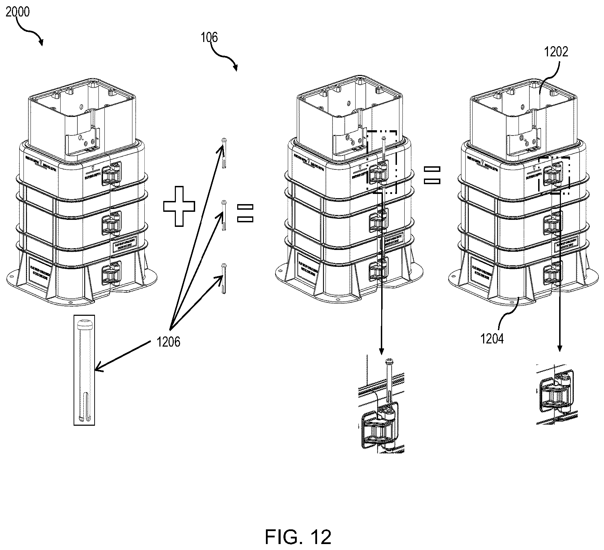

In accordance with an embodiment of the present disclosure, top end of the top shell (104) mates with the top cover (108) to form the top casing (402) as shown in FIG. 4 and an inner female profile of the top casing (402) mates with a male profile of the base unit (106). In particular, an open-end female profile of the top casing (402) mates with a male profile of the base unit (106). Moreover, a rectangular profile of the top casing (402) is assembled onto a rectangular profile of the base unit (106). Furthern an open end (606) of the top casing (402) is removably engaged to a connection end (1202) (as shown in FIG. 12) of the base unit (106). These details are further elaborated below in conjunction with FIG. 3 to FIG. 26.

FIG. 3 illustrates a bottom perspective view (300) of the top cover (108) of the optical fiber enclosure (102). Particularly, the top cover (108) secures the top shell (104) using adhesives / bonding agents within a peripheral channel (U-shaped profile channel) (302) running all around a periphery of the top cover (108). Moreover, he adhesives / bonding agents in viscous liquid form are poured into the peripheral channel (U-shaped profile channel) (302) of the top cover (108) which forms a liquid pool. Further, the adhesives / bonding agents seal fine gaps between walls of the peripheral channel (U-shaped profile channel) (302) and the walls of the top shell (104) all around due to flow displacement of the liquid adhesives / bonding agents. This forms a sealed bonding between an extruded top shell face and the top cover (108) resulting in a single one side closed top casing (402).

In accordance with an embodiment of the present disclosure, he peripheral channel (302) ensures robust sealing under submerged conditions. The peripheral channel (302) is engineered to accommodate and secure the engagement of the top cover (108) and the top walls (202-208) of the top shell (104), facilitating a tight and reliable seal that withstands the challenges posed by floodwaters. The peripheral channel (302) structurally reinforces the connection between the top cover (108) and the top walls (202-208). The peripheral channel (302) allows for precise alignment and bonding and ensures durable seal that withstands the hydraulic forces exerted by floodwaters. The peripheral channel (302) is engaged and bonded with edges (220-226) of the top walls (202-208). The engagement and bonding are done using at least one of ultrasonic welding process, plastic welding process, heat sealing process, adhesive epoxies process, Polyvinyl chloride (PVC) solvent cement process.

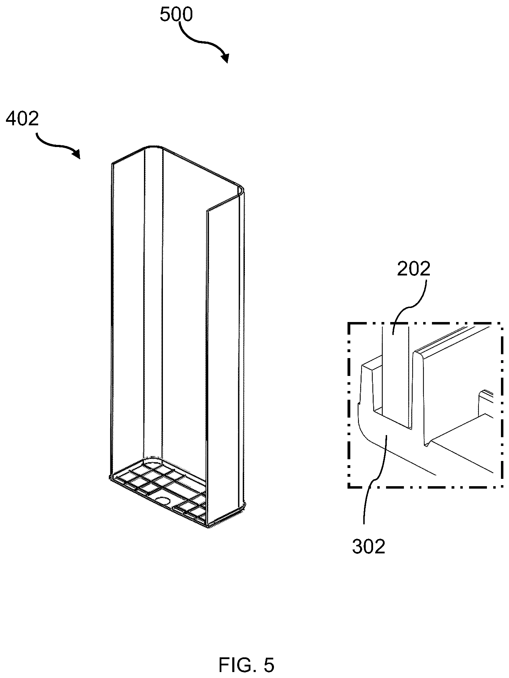

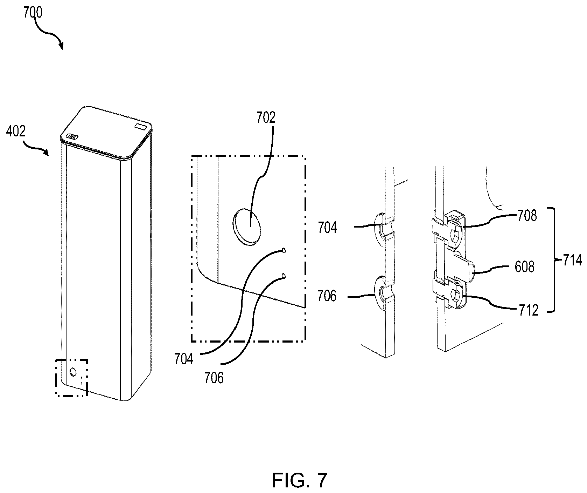

FIG. 4, FIG. 5, FG. 6 and FIG.7 illustrates an upside down view (400) of the top cross-sectional view (500) ,a front perspective view (600) another front perspective view (700) of the top casing (402) in accordance with various embodiments of present invention. The front perspective view (700) including an auto-lock access hole (702), holes (704, 706), and fasteners (708, 712) passing through the holes (704, 706).

In accordance with an embodiment of the present disclosure, the top casing (402) is an extruded component, so as to provide resilience against external hydrostatic pressures when submerged. The top casing (402) enhances flood resistance by providing resilience against external hydrostatic pressures when submerged (adverse conditions). The extruded component is engineered with inherent strength and durability, enabling the optical fiber enclosure (102) to withstand the pressure exerted by floodwaters without compromising structural integrity. The superior strength of the top casing (402) ensures that an optical storage compartment (404) remains intact even under hydrostatic pressures, thereby minimizing the risk of water ingress. Further, the extruded component has exceptional resistance to deformation and collapse that ensures that the optical fiber enclosure (102) maintains its shape and integrity, even when subjected to prolonged submersion in floodwaters. The top casing (402) enhances the enclosure's ability to withstand dynamic loading conditions associated with flooding, including water currents, debris impact, and sediment erosion.

In accordance with an embodiment of the present disclosure, the top casing (402) is defined by a wall thickness of 1 mm to 5 mm and made of a non-permeable thermoplastic material to ensure structural integrity under a submerged condition. The non-permeable thermoplastic material can be, for example, but not limited to, Acrylonitrile Butadiene Styrene (ABS), Polypropylene (PP), a PP-GLASS filled material, a rigid Poly-Vinyl Chloride (PVC), a nylon glass filled material or the like.

Further, the walls (202-208) of the top casing (402) are sufficiently thick to withstand hydrostatic pressure exerted by floodwaters, while the impermeable nature of the thermoplastic material prevents water from infiltrating the interior of the optical fiber enclosure (102). The use of non-permeable thermoplastic material enhances the resistance of the optical fiber enclosure (102) to water penetration.

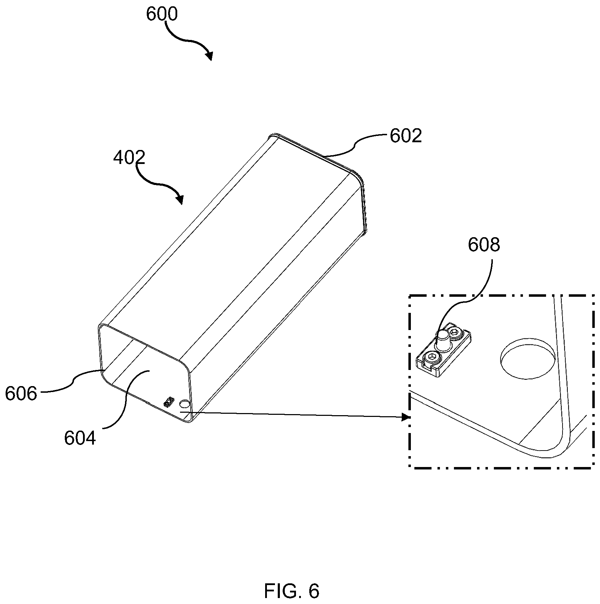

Referring to FIG. 6, a structure of the top casing (402) is open at one end (606) and closed on the other end (602). The open end (606) of the top casing (402) engages with the base unit (106). The closed end (602) and the open end (606) of the top casing (402) are, but not limited to, substantially rectangular or substantially square structure. Further, the rectangular / square shape of the top casing (402) creates more volumetric space (604) which thereupon creates opportunities for the universal pedestal.

In accordance with an embodiment of the present disclosure, the closed end (602) is devoid of apertures preventing water ingress into the optical compartment, safeguarding sensitive components from damage during flooding events. The closed end (602) facilitates the trapping of air inside the top casing (402) and forms a protective barrier against water intrusion. During flooding, the trapped air becomes compressed, and exerts pressure against the ingress of water, which enhances the flood resistance capabilities of the optical fiber enclosure (102). The trapped air inside the top casing (402) acts as a buoyant force, effectively counteracting the downward pressure exerted by floodwaters. This buoyancy assists in maintaining the optical compartment above the water level.

Further, protection against flooding and water level rise around the buried optical fiber enclosure (102) is achieved by primarily due to a bell jar effect created by the trapped air. The closed end (602) eliminates potential entry points for waterborne contaminants, such as debris or sediment, which could adversely affect the performance of optical fibers and associated equipment. The closed end (602) minimizes vulnerabilities and points of weakness. This robust design ensures that the optical fiber enclosure (102) maintains its integrity and functionality even under challenging flood conditions.

Referring to FIG. 7, the auto-lock access hole (702) is created to allow an insertion of a telecom-can-216 tool. The holes (704 and 706) are drilled (as shown in FIG. 7) for inserting threaded brass inserts. The holes (704, 706) and the striker-lock pin (608) form a striker-lock assembly (714), which is mounted on the top casing (402) using threaded fastener(s) (or any other fastening means) at drilled hole positions and addresses installation challenges. Further, the striker-lock pin (608) automatically engages with an auto-lock receiver (or snap auto-lock receiver) (808) located at the connection end (1202) of the base unit (106) to secure the open end (606) of the top casing (402). The striker-lock pin (608) performs an autolocking and retention of the top casing (402) with the base unit (106).

FIG. 8 illustrates a cross sectional perspective view (800) of various element in the base unit (106).

In accordance with an embodiment of the present disclosure, the base unit (106) includes an extended region (814) configured to interlock with the top casing (402). The extended region (814) on the base unit (106) enhances flood resistance by promoting structural cohesion between the base unit (106) and components in the top casing (402). Moreover, the extended region (814) serves as a key interface for interlocking and coupling the base unit (106) with the top casing (402), so as to withstand the hydraulic forces exerted by floodwaters. Further, reinforced connection between the base unit (106) and components in the top casing (402) minimizes the risk of separation or displacement during flood. The extended region (814) on the base unit (106) provides a larger contact surface for interfacing with the top casing (402), so as to facilitate a stronger and more reliable coupling and interlock between the two components.

Additionally, the base unit (106) comprises a rubber sealing cap (802), an auto-lock hexagon part (804), a peripheral sealing element (e.g., compressed polymer sealing element or push rubber spring sealing element) (806), the auto-lock receiver (or snap auto-lock receiver) (808), and an auto-lock bumper rubber (810) to secure the top casing (402).

In accordance with an embodiment of the present disclosure, the peripheral sealing element (806) is configured to securely seal the open end (606) (shown in FIG. 6) of the top casing (402) with the connection end (1202) (shown in FIG. 12) of the base unit (106). In particular, the peripheral sealing element (806) works as a sealing in the optical fiber enclosure (102) in a closed configuration and pushes the top casing (402) upward while opening the optical fiber enclosure (102) by expending the peripheral sealing element (806) to provide assistance in lifting the top casing (402). Moreover, the peripheral sealing element (806) is configured to securely seal the open end (606) of the top casing (402) with the connection end (1202) of the base unit (106). The peripheral sealing element (806) enables sealing in the optical fiber enclosure (102) in a closed configuration and exerts lifting force on the top casing (402) to assist opening the optical fiber enclosure (102). Further, the peripheral sealing element (806) includes a compressed polymer engineered to exert upward force on the top casing (402) during decoupling from the base unit (106), so as to facilitate a lifting of the top casing (402) or pushing of the top casing (402) in upward direction to assist in lifting of the top casing (402). The peripheral sealing element (806) enhances the ease of maintenance and servicing of the optical fiber enclosure (102). Further, the peripheral sealing element (806) at a bottom of the base unit (106) prevents moisture ingress from the base unit (104) to the top cover (108).

When the top casing (402) is inserted onto the base unit (106) and pushed down against the resistance of the peripheral sealing element (806) and the auto-lock bumper rubber (810), the striker-lock pin (608) of the top casing (4402) engages with the snap auto-lock receiver (808) during the downward motion and gets locked into it. Hence, the top casing (4402) is now locked to the base unit (106) which houses the snap auto-lock receiver (or receiver) (808).

In order to unlock the top casing (402), the telecom-can-216 tool can be inserted onto the auto-lock hexagon part (804) and turned clockwise which releases the striker-lock pin (608) from the snap auto-lock receiver (808) and the peripheral sealing element (806), and the auto-lock bumper rubber (810) further lifts up the top casing (402) vertically just enough to free the striker-lock pin (608) from the receiver (808). The peripheral sealing element (806) is made of engineering grade rubber located on the base unit (106). The peripheral sealing element (806) serves to cushion the top casing (402) and provide spring action to facilitate lifting during the unlock operation.

In accordance with an embodiment of the present disclosure, , the optical fiber enclosure (102) is opened using the telecom-can-216 tool by accessing an access hole (812) and by actuating the auto-lock hexagon part (804) located in the access hole (812) clockwise that releases the striker-lock pin (608) of the top casing (402). The top cover (108) has a cut out hole that provides access to the auto-lock hexagon part (804). The access hole is plugged using a rubber sealing cap (802). The rubber sealing cap (802) provides protection to the optical fiber enclosure (102) from dust and water ingress.

When the top casing (402) is placed on the base unit (106) and pushed down, the auto-lock hexagon part (804) is activated, thereby locking the top casing (402) with the base unit (integral base structure) (106) resulting in a completely locked optical fiber enclosure (102). Hence, the internal optical elements of the optical fiber enclosure (102) are protected from external environmental effects including sunlight, wind, dust, biological life forms, rain, floods and fire and against unauthorized access.

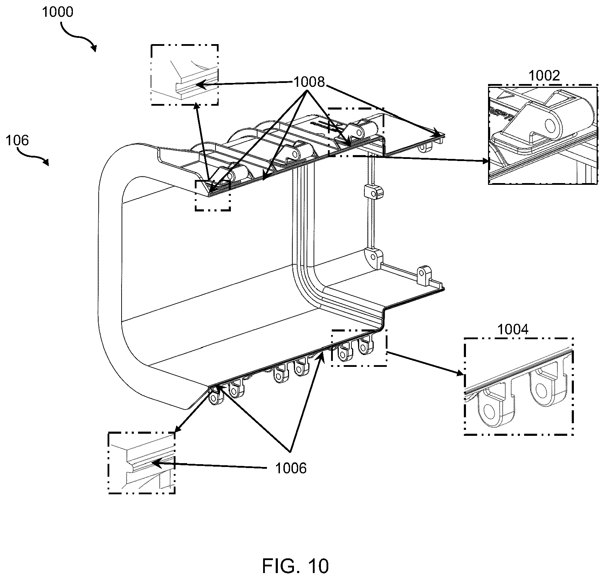

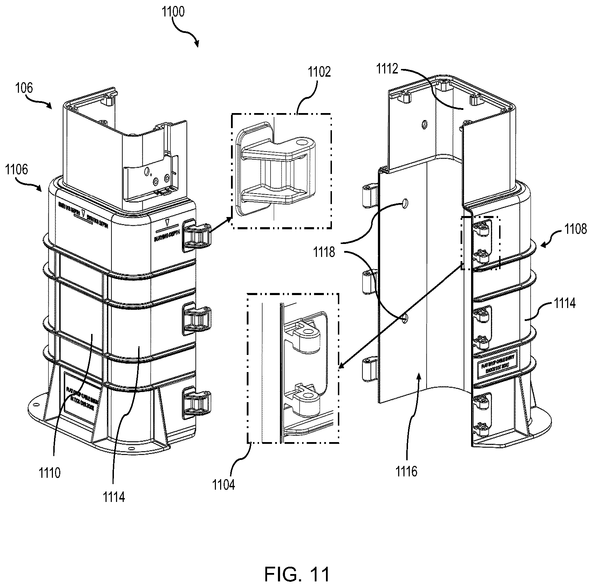

FIG. 10 illustrates a perspective view (1000) of the base unit (106) of the optical fiber enclosure (102). FIG. 11 to FIG. 14 illustrate perspective views (1100-1400) of the base unit (106) in various configurations.

In particular, tTe base unit (106) includes a first shell (1106) and a second shell (1108) identical to the first shell (1106) hinged together and partially openable to access optical fiber components inside the base unit (106). Each of the first shell (1106) and the second shell (1108) is opened at an angle greater than 90 degrees from a plane joining hinge means (1206). Moreover, the base unit (106) defined by one or more walls (1110, 1112) forms a burying end (1204) and the connection end (1202). Further, he burying end (1204) is an open end, which is buried under a land surface. The burying end (1204) is configured for subterranean placement beneath the land surface. The burying end (1204) is securely positioned beneath the land surface, thus minimizing the risk of floodwater intrusion.

In accordance with an embodiment of the present disclosure, the subterranean placement provides an added layer of protection against erosion and soil displacement during flooding events. In particular, the subterranean placement withstands hydrodynamic forces exerted by floodwaters and maintains its stability and structural integrity even in high-flow conditions. Moreover, he subterranean placement provides an ability to resist displacement and remain operational during and after flood events. The burying end (1204) and the connection end (1202) has a cross section that is substantially rectangular or substantially square. The substantially rectangular or substantially square cross-section of the burying end (1204) and the connection end (1202) allows for more efficient use of space, particularly in confined areas.

In accordance with an embodiment of the present disclosure,, the base unit (106) includes the one or more walls (1110, 1112), where adjacent wall sections from the one or more walls (1110, 1112) are removably hinged along adjacent vertical edges (1114). The one or more walls (1110, 1112) is partially openable to enable access to optical fiber components inside the base unit (106). The partially openable wall sections of the base unit (106) enable easy access to the optical fiber components, addressing the problem of accessibility in buried portions of existing high-density enclosures. Further, allowing individual opening of the wall sections facilitates access to specific areas within a base compartment (1116).

In accordance with an embodiment of the present disclosure, the one or more walls (1110, 1112) are configured to be opened at an angle greater than 90 degrees from a locked position. Opening of the one or more walls (1110, 1112) at angles greater than 90 degrees provide wider access to the base compartment (1116), so as to facilitate easier maintenance of components in the optical fiber enclosure (102) even after the installation of the optical fiber enclosure (102).

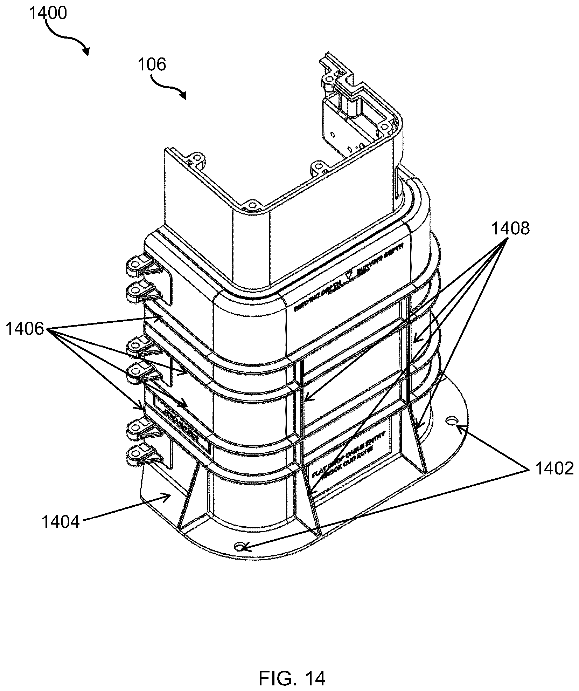

In accordance with an embodiment of the present disclosure, the one or more walls (1110, 1112) of the base unit (106) are configured to be opened individually to access the base compartment (1116) of the base unit (106) by unlocking exactly one vertical edge. Further, the base unit (106) includes one or more elevated ribs (1406, 1408), as shown in FIG. 14, on an outer surface of the base unit (106) for firmly engaging the base unit (106) into the land surface. The one or more elevated ribs (1406, 1408) enhances stability and facilitates secure placement of the optical fiber enclosure (102) in soil, addressing installation challenges associated with the existing enclosures.

In accordance with an embodiment of the present disclosure, the base unit (106) includes two similar halves (i.e., two similar C-shaped body) which engage mutually with each other to form as single structure. The base unit (106) includes male hinge features (1002) on one side of the C-shaped body and female hinge features (1004) on the opposite side, i.e., another side of the C-shaped body. Two side faces of the male hinge features (1002) and the female hinge features (1004) have a male interlocking shape and a female interlocking shape, respectively.

The two halves are basically the same parts designed to self-mate with itself when positioned by 180 degrees and facing each other. When the same two halves are placed facing one another (where two halves are joined with U-shaped male female joints and threaded fastener), the male and female hinge features (1002, 1004) engage and interlock with one another forming the single structure. The two side faces with male and female interlock shapes of both the bottom housings engage and achieve interlocking at face to face level. Hinge means (e.g., hinge pin) (1206) are inserted into the interlocked male and female hinges (1102, 1104). Fixing the three hinge pins (1206) on one side of the interlocked structure allows the base unit (106) to open and close in a book like manner (upto 160 degrees) allowing access to the optical fiber-cables during installation and also to partially open post deployment to inspect or access of the optical fiber cables.

In accordance with an embodiment of the present disclosure, the mating faces of the base unit (106) have a male interlocking feature and a female interlocking feature providing interlocking strength to the final structure. By adding room temperature vulcanization compound also called as silicone gasket maker to the interlock faces of the two halves, absolute air tightness and water tightness is achieved. Further, face to face interlocking with room temperature vulcanization compound is applied on the two halves faces just before closing the two shells (1106, 1108) together and the hinge means (e.g., 3 hinge pins) (1206) is fixed on the remaining 3 hinges. The three hinge pins (1206) are inserted after closing the two halves together.

The combination of male and female hinges (1102, 1104) and the hinge pins and the interlock features on the mating faces when engaged results in a single sturdy integral base structure which during deployment is anchored firmly into the ground. This technology proves very user-friendly during deployment as it allows the field engineers to keep the halves in semi-open condition to access cables, ports, and also carry out inspection of ducts and cables. Further, RTV silicone (1302) is applied on (or forms) a male interlock face (1006) and a female interlock face (1008).

In accordance with an embodiment of the present disclosure, the one or more elevated ribs (1406, 1408) are provided on base split halves externally to facilitate better anchoring and gripping on the soil when the base unit (106) is buried in the ground (or land surface) during deployment of the optical fiber enclosure (102). A large bottom flange (1404) is provided to enhance both flat seating in a pit and anchoring once the base unit (106) is buried. Anchoring bolt holes (1402) are provided at the bottom flange (1404) used for surface mounting and deployment applications.

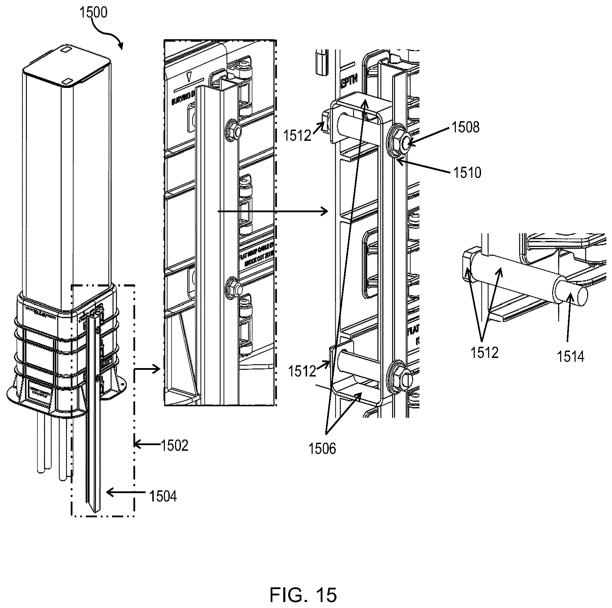

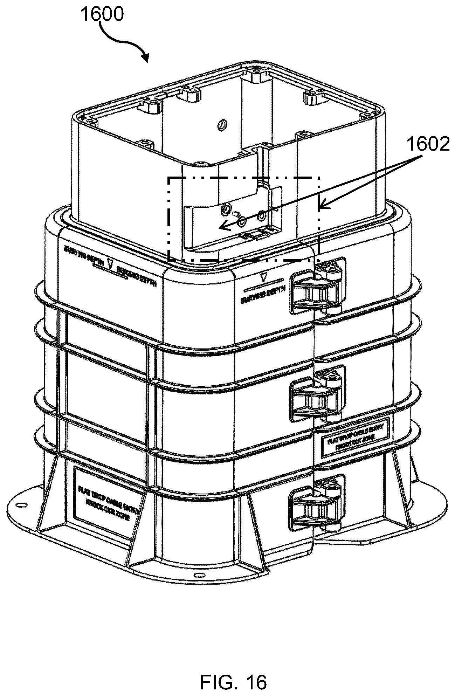

FIG. 15 illustrates a sectional exploded view (1500) of an anchoring stake module (or a grounding kit) (1502) integrated with the base unit (106). FIG. 16 illustrates a perspective view (1600) of the base unit (106) with a recessed pocket feature (1602) to house the auto-lock receiver (808).

In accordance with an embodiment of the present disclosure, the anchoring stake module (1502) is added from outside of the optical fiber enclosure (102) using spacer bolts (1512) at the two mounting holes (1118) in the base unit (106). The U-shaped channel (1504) is buried into the ground by hammering it down vertically to the marked levels. The two spacer bolts (1512) with rectangular / square heads are inserted from inside of the base unit (106) such that the heads of the two spacer bolts (1512) resist rotation. A C-shaped spacer sheet metal bracket (1506) is mounted on two spacer bolt projections. This assembly is then guided into the U-shaped buried channel (1504) such that the threaded portions (i.e., external thread) (1514) of the two spacer bolts (1512) pass through the two mounting holes (1118) of the U-shaped channel (1504).

Further, the two spacer bolts (1512) are provided with flanged hexagonal nuts (1508) and a washer (1510) that are fixed and tighten on the bolt threads (i.e., external thread) (1514), thereby integrating the base unit (106) with the anchoring stake module (1502) and firmly rooting into the ground. The gaps around the base unit (106) inside the pit are backfilled with the gravel / sand or soil that was removed to create the pit to bury the base unit (106) along with the anchoring stake module (1502).

In accordance with an embodiment of the present disclosure, the base unit (106) has the recessed pocket feature (1602) to house the auto-lock receiver (808). In particular, the base unit (106) also has a design option having plain flat wall instead of the recessed pocket feature (1602), wherein the plain flat wall is used where there is no need to install the auto-lock on it. Further, the base unit (106) has the first shell (1106) with the recessed pocket feature (1602) housing the auto-lock receiver (808) and the second shell (1108) with flat plain wall and no recessed pocket feature (1602).

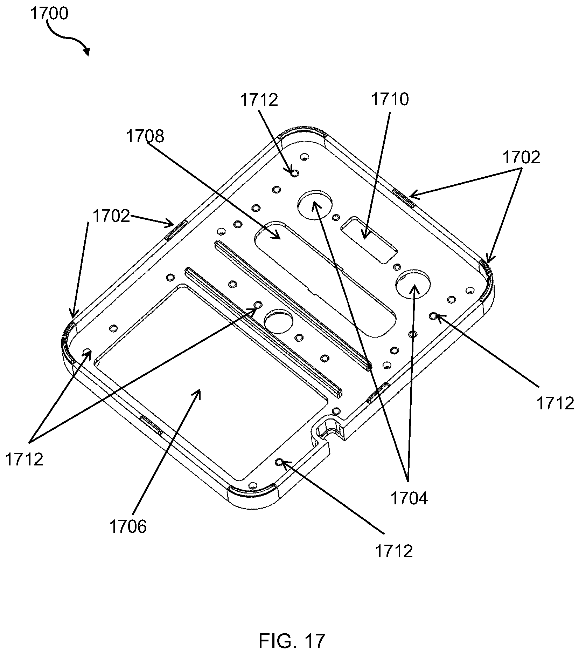

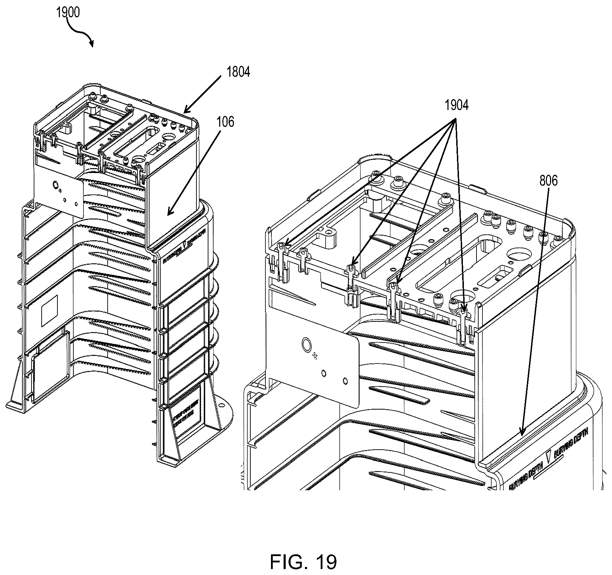

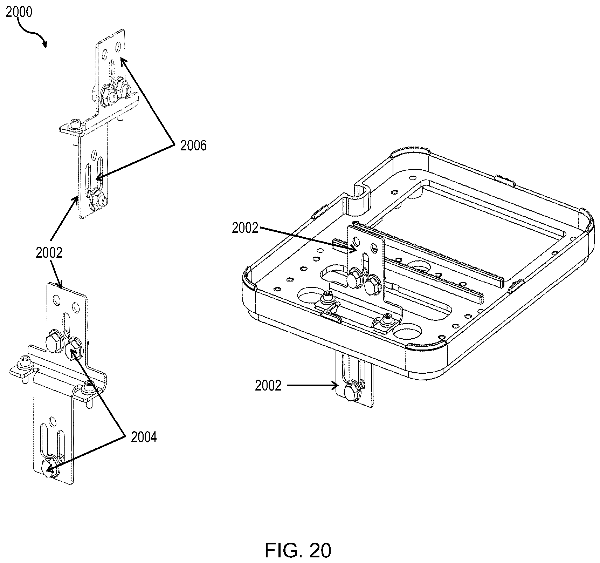

FIG. 17 to FIG. 18 illustrate top perspective views (1700-1800) of a primary chassis plate (1804) attached with a reinforcement metal plate (1802) to increase the stiffness of the primary chassis plate (1804). FIG. 19 illustrates a front perspective view (1900) of the base unit (106) after integrating the primary chassis plate (1804) with the base unit (106). FIG. 20 to FIG. 21 illustrate perspective views (2000-2100) of the primary chassis plate (1804) with various elements.

In particular, the primary chassis plate or the chassis plate (1804) is mounted on the connection end (1202) of the base unit (106). The chassis plate (1804) is sealed with a primary rubber seal and a secondary rubber seal on at least one side or at a periphery of the chassis plate (1804). Moreover, the primary chassis plate (1804) is made of high strength engineering thermoplastic. Further, the primary chassis plate (1804) has one or more recess (1704, 1706, 1708, 1710) for holding primary mid-span cables, distribution cables, flat drop and round drop cables and the grounding bracket (2002). Furthermore, the primary chassis plate (1804) has the threaded brass inserts (1712) for receiving one or more attachment mechanisms (e.g., threaded screws (1904)) to facilitate mounting of components such as, but not limited to, the reinforcement metal plate (1802), a looped chassis frame (2310), cable clamp brackets, flat and round drop cable mounting brackets, and the grounding bracket (2002).

In accordance with an embodiment of the present disclosure, the one or more attachment mechanisms (e.g., threaded screws) (1904) seated on the primary chassis plate (1804) enabled to secure it with the base unit (106). The one or more attachment mechanisms (e.g., threaded screws) (1904) together with the primary chassis plate (1804) hold the two halves of the base unit (106) together and form a rigid box structure.

In accordance with an embodiment of the present disclosure, the reinforcement metal plate (1802) is used for increasing the stiffness and load bearing capacity of the primary chassis plate (1804) for deployment cases where there are heavy duty loads are to be mounted on the looped chassis frame (looped universal chassis frame) (2310) and on the primary chassis plate (1804). Further, the reinforcement metal plate (1802) rests in a pocketed cavity (not shown) where the openings of the primary chassis plate (1804) are replicated on the reinforcement metal plate (1802) allowing access and assembly of all modules onto the integral metal plate reinforced primary chassis plate (1804).

In accordance with an embodiment of the present disclosure, the chassis plate (1804) includes the one or more recess (1704, 1706, 1708, 1710) to receive one or more optical fiber cables (2102) and other components used herein. The one or more recess (e.g., recess 1710) allows a grounding bracket (2002) to pass through it and to hold the corresponding one or more optical fiber cables (2102). The primary chassis plate (1804) holds the grounding bracket (2002) (e.g., double L-profile shaped grounding bracket module).

In accordance with an embodiment of the present disclosure, the grounding bracket (2002) includes two L shaped member (L shaped bracket) (2006) connected in a way that long arm of a first L backet is above the primary chassis plate (1804) and long arm of the second L bracket is below the primary chassis plate (1804). In particular, the grounding bracket (2002) projects above the primary chassis plate (1804) and receives grounding conductors from metallic bodies such as armour of cables and other metallic objects that needs to be grounded. Moreover, the grounding bracket (2002) projects below the primary chassis plate (1804) to facilitate grounding cable connection from grounding bracket (2002) to a copper plated grounding rod. The copper plated grounding rod is buried in the ground below the optical fiber enclosure (102). This arrangement enables complete grounding of the optical fiber enclosure (102) and all its metallic elements thereby ensuring safety to the personnel and the telecommunication equipment inside the optical fiber enclosure (102). Further, the grounding bracket (2002) includes the one or more fasteners (i.e., holding member or threaded fastener) (2004) to secure to the one or more optical cables (2102) and to secure grounding cable lugs to the grounding bracket (2002).

Further, the primary chassis plate (1804) houses and holds solid stop cable clamp mounting brackets (one or more cable clamp) (2104) to further hold the optical fiber cables (2102) (such as the primary mid-span cables and the distribution cables). The one or more cable clamp (2104) with one or more solid stop member (2106, 2108) are mounted along with the one or more recess (1704, 1708) to stop a strength member of the optical fiber cables (2102). The solid stop member (2106, 2108) prevents the growth of the strength member inside the optical fiber enclosure (102) as the strength members grows with the time because of environmental effects with shrinkage and melting.

A position of the solid stop cable clamp mounting bracket (2104) is adjusted allowing variety of the optical fiber cables (2102), telecommunication cables and power cables to be secured, clamped and/ or grounded. The solid stop cable clamp mounting bracket (2104) serves to hold one or more fiber strength members (such as fibre-reinforced plastics and/or wires) (2212) of the optical fiber cables (2102) firmly onto the pedestal and provides positive arresting of the central strength member of the optical fiber cables (2102) and thereby prevents growth of the central strength member into the optical zone of the optical fiber enclosure (102) and prevents damages.

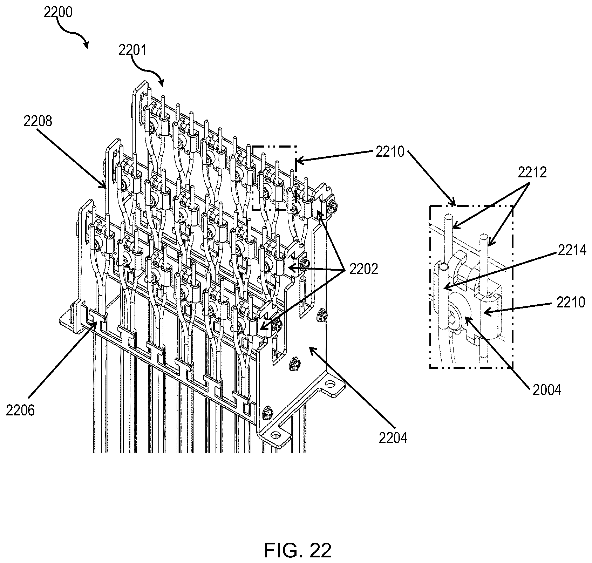

In accordance with an embodiment of the present disclosure, the chassis plate (1804) includes another recess (i.e., window (1706)) for mounting a drop cable assembly module (2201) alongside the window (1706). The drop cable assembly module (2201) may be a flat and/or a round drop cable module. The drop cable assembly module (2201) facilitates the management of flat / round optical fiber cables in stepped rows independently. The primary chassis plate (1804) is provided with tapered guide lead-in features (1702). FIG. 22 illustrates a perspective view (2200) of the drop cable assembly module (2201). Further, the drop cable assembly module (2201) includes two side plates (2204, 2208) in stepped manner for accommodating one or more cable brackets forming a drop cable bracket assembly (2202) that has one or more fibre-reinforced plastic (FRP) brackets (2210) comprising the one or more fiber strength members (fiber-reinforced plastic rods or wires) (2212) and optical fiber loose tubes (2214). That is, each row of the drop cable bracket assembly (2202) includes multiple numbers of drop cable brackets. Each drop cable bracket assembly (2202) holds one drop cable (e.g., flat cable, round cable or the like). In FIG. 22, three rows of drop cable brackets are stepped one below the other allowing direct access to the threaded fastener(s) (2004) on the drop cable bracket assembly (2202) at any of the locations. A drop cable tie bracket (2206) is located below the drop cable bracket assembly (2202). The drop cable tie bracket (2206) has T-shaped provisions to bind the drop cables with the bracket T-shape metal feature using cable ties for each of the cable. The drop cable bracket assembly (2202) has one drop cable FRP bracket (2210) on its each side.

In accordance with an embodiment of the present disclosure, the looped mounting frame (2310) is mounted on the chassis plate (1804).

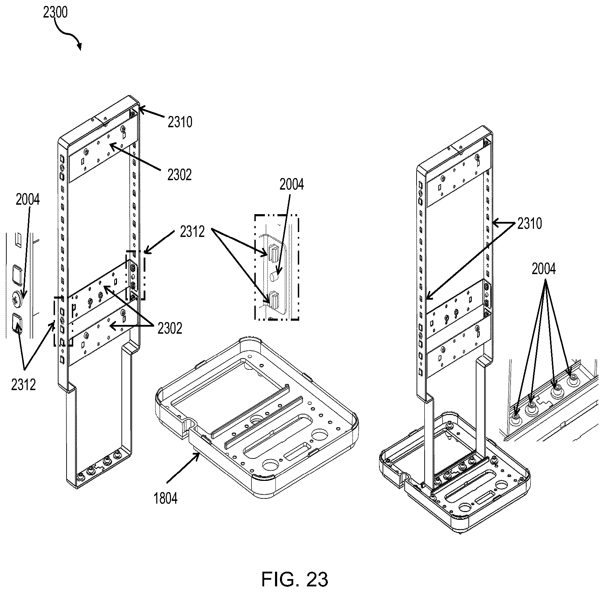

FIG. 23 illustrates a perspective view (2300) of the primary chassis plate (1804) locating and securing the looped mounting frame (2310). In particular, the looped mounting frame (2310) is designed in a way that the looped mounting frame (2310) creates a closed looped structure to enhance load bearing strength of the looped mounting frame (2310) for mounting one or more optical components (e.g., splice trays, fiber storage module, patch panel, power backup battery module, CBT, splitter, or the like). The primary chassis plate (1804) locates and secures the looped mounting frame (2310) vertically (i.e., perpendicular to the primary chassis plate (1804)). The threaded fastener(s) (2004) secures and holds the looped mounting frame (2310) onto the primary chassis plate (1804). Moreover, the looped mounting frame (2310) has a combination of rectangular and circular holes pattern distributed vertically which can be used to mount the one or more horizontal mounting plates (2302) at any required positions and facing either forward or backward. Further, the looped mounting frame (2310) accommodates the one or more horizontal mounting plates (2302) which can be mounted at any position vertically using the combination of hole patterns and the plastic snap-locks and the threaded fastener(s) (2004) and fastening means (2312). The one or more horizontal mounting plates (2302) also have the same matching combination of rectangular and circular holes. The snap-lock parts have flexible limbs that enable them to flex when passing through the rectangular slots on both halves of the looped mounting frame (2310) and the one or more horizontal mounting plates (2302). The one or more horizontal mounting plates (2302) can be mounted facing either forward or backward relative to the looped mounting frame (2310).

In accordance with an embodiment of the present disclosure,, a number of cross brackets are mounted between two side walls of the looped mounting frame (2310) and all the optical components such as but not limited to CBT, slack management module etc. are mounted over the cross brackets by using plurality of fastening means such as bolts. The slack management module stores and manages all the fiber cables inside the optical fiber enclosure (102).

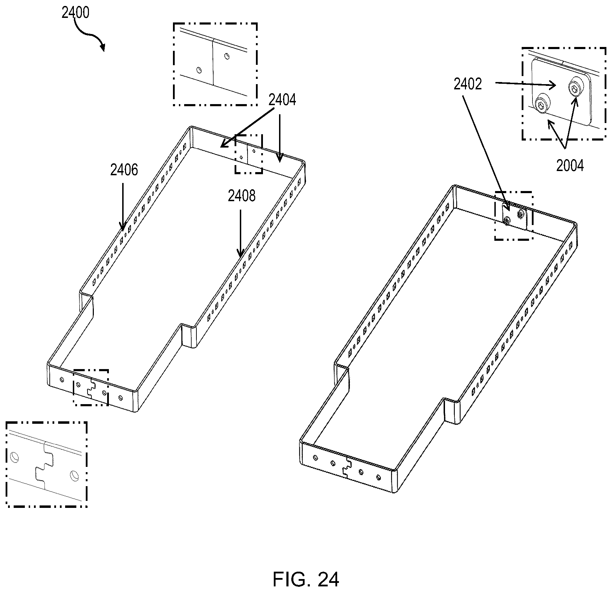

FIG. 24 illustrate a perspective view (2400) of the looped mounting frame (2310) with various elements. In particular, the looped mounting frame (2310) includes two identical halves (2404) mated with each other by one or more fasteners (2004). Moreover, the looped mounting frame (2310) is stable and high strength platform for mounting accessory modules capable to taking extra load. The identical halves (2404) assist in achieving proper alignment between two ends of the one or more horizontal mounting plates (2302). Further, the looped mounting frame (2310) includes two self-mating looped chassis halves (2404) where a first self-mating looped chassis halve (2406) is used to mate with a second self-mating looped chassis halve (2408) to form a closed looped universal chassis. A special combination of U and C cut-outs on each of the haves enable two similar halves to interlock with one another and unite them at the bottom of the single loop. The special combination of U and C cut-outs after interlocking by the two halves at the bottom forms a closed loop as shown in FIG. 24.

In accordance with an embodiment of the present disclosure, the same two halves face and touch each other at the top and this assembly is held together using the unite bracket plate (2402) and the threaded fastener(s) (2004). The two threaded holes on the loop and the two plain holes in the unite bracket plate (2402) align and allow the threaded fastener(s) (2004) to hold the two halves together.

In accordance with an embodiment of the present disclosure,, the looped mounting frame (2310) includes two parallel arms (2406, 2408) perpendicular to the chassis plate (1804) to accommodate the one or more horizontal mounting plates (2302). The parallel arms (2406, 2408) enable efficient organization and placement of multiple components (i.e., optical component) within the optical fiber enclosure (102). The one or more horizontal mounting plates (2302) are engaged between the two parallel arms (2406, 2408) by the one or more fasteners (2004). The one or more fasteners (2004) may be snap-fit type fasteners or threaded screws based on size, weight and compatibility of the one or more optical components to be mounted. Hence, the one or more fasteners (2004) allow to mount multiple components in smaller space.

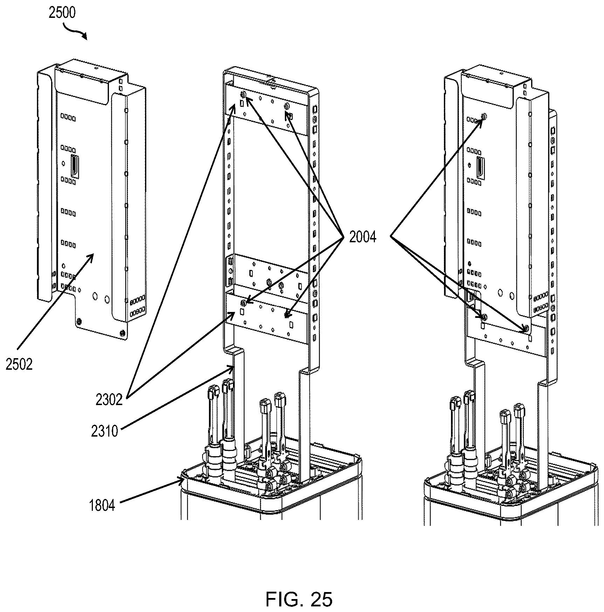

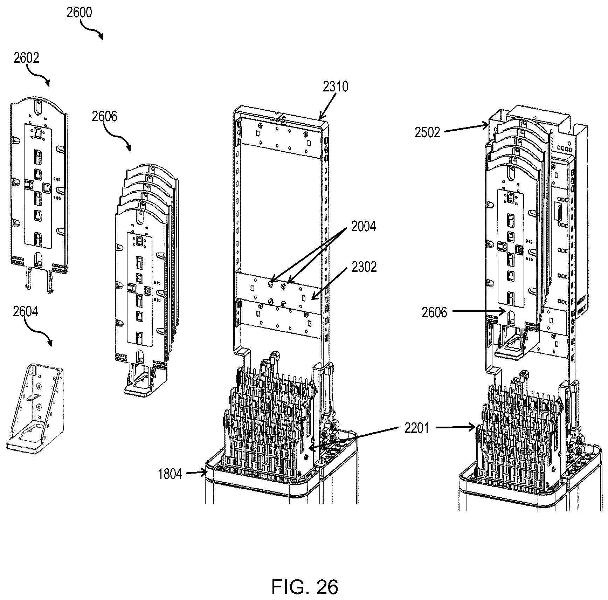

FIG. 25 illustrates an exploded perspective view (2500) of the looped mounting frame (2310) integrated with the base unit (106) holding the one or more optical component(s) (e.g., splice trays, fiber storage module, patch panel, power backup battery module, CBT, splitter, or the like). FIG. 26 illustrates another exploded perspective view (2600) of the base unit (106) holding the looped mounting frame (2310) with various optical components.

In accordance with an embodiment of the present disclosure, the top casing (402) includes the optical storage compartment (404) for accommodating/covering a modular interface of the base unit (106) compatible for one or more optical components. The optical storage compartment (404) is devoid of any apertures through the closed end (602) of the top casing (402), so as to preserve integrity of the optical storage compartment (404) against water ingress until submerged, while maintaining the open end (606) of the top casing (402). In particular, the modular interface is a combination of the entire mounting assembly including the chassis plate (1804), the looped mounting frame (2310) and the one or more horizontal mounting plates (2302). Moreover, the modular interface includes the chassis plate (1804) mounted on the connection end (1202) of the base unit (106) using one or more attachment mechanisms (1904). Also, the modular interface includes the looped mounting frame (2310) mounted on the chassis plate (1804). Further, the modular interface is a compatible accessory module that facilitates easy integration of additional components, allowing for customized configurations and addressing challenges related to component placement in the optical fiber enclosure (102).

In accordance with an embodiment of the present disclosure, the one or more horizontal mounting plates (2302) holds the storage module (2502). The storage module (2502) stores and accommodates both mid span optical fiber loose tubes and normal optical fibre loose tubes brought into the optical fiber enclosure (102) by the primary and distribution of cables (2102). Further, the storage module (2502) is mounted onto the one or more horizontal mounting plates (2302) at top and bottom of the looped mounting frame (2310) using the threaded fastener(s) (2004).

In accordance with an embodiment of the present disclosure, the looped mounting frame (2310) holds the splice tray module (2606). The splice tray module (2606) is mounted onto the one or more horizontal mounting plates (2302) of the looped mounting frame (2310) using the threaded fastener(s) (2004). The optical fiber loose tubes from the storage module (2502) are routed into the splice trays (2602) of the splice tray module (2606). The splice trays (2602) are rotatable and lockable by 90 degrees. The optical fiber loose tubes from the splice trays (2602) are spliced with the optical fibers from the drop cable assembly module (2201). The splice tray module (2606) is provided with a splice tray hub (2604).

FIG. 27 illustrates a sectional view (2700) of the optical fiber enclosure (102) including the burying level indicator (110). The optical region and its components are sufficiently placed above a burying depth (2702) inside of the optical fiber enclosure (102).

In accordance with an embodiment of the present disclosure, height of the optical fiber enclosure (102) above the land surface is less than 750 milli-meter (mm), so as to ensure sustained integrity of the optical storage compartment (404) against water intrusion until submerged to a height exceeding 25 mm above the land surface. By adhering to the design, the optical fiber enclosure (102) maintains its effectiveness against floodwaters while balancing the costs of manufacturing for widespread commercial usage.

A person of ordinary skill in the art may be aware that, in combination with the examples described in the embodiments disclosed in this specification, units and algorithm steps may be implemented by electronic hardware, computer software, or a combination thereof.

The foregoing descriptions of specific embodiments of the present technology have been presented for purposes of illustration and description. They are not intended to be exhaustive or to limit the present technology to the precise forms disclosed, and obviously many modifications and variations are possible in light of the above teaching. The embodiments were chosen and described in order to best explain the principles of the present technology and its practical application, to thereby enable others skilled in the art to best utilize the present technology and various embodiments with various modifications as are suited to the particular use contemplated. It is understood that various omissions and substitutions of equivalents are contemplated as circumstance may suggest or render expedient, but such are intended to cover the application or implementation without departing from the spirit or scope of the claims of the present technology.

Disjunctive language such as the phrase "at least one of X, Y, Z," unless specifically stated otherwise, is otherwise understood with the context as used in general to present that an item, term, etc., may be either X, Y, or Z, or any combination thereof (e.g., X, Y, and/or Z). Thus, such disjunctive language is not generally intended to, and should not, imply that certain embodiments require at least one of X, at least one of Y, or at least one of Z to each be present.

In a case that no conflict occurs, the embodiments in the present disclosure and the features in the embodiments may be mutually combined. The foregoing descriptions are merely specific implementations of the present disclosure, but are not intended to limit the protection scope of the present disclosure. Any variation or replacement readily figured out by a person skilled in the art within the technical scope disclosed in the present disclosure shall fall within the protection scope of the present disclosure. Therefore, the protection scope of the present disclosure shall be subject to the protection scope of the claims.

The foregoing descriptions of specific embodiments of the present technology have been presented for purposes of illustration and description. They are not intended to be exhaustive or to limit the present technology to the precise forms disclosed, and obviously many modifications and variations are possible in light of the above teaching. The embodiments were chosen and described in order to best explain the principles of the present technology and its practical application, to thereby enable others skilled in the art to best utilize the present technology and various embodiments with various modifications as are suited to the particular use contemplated. It is understood that various omissions and substitutions of equivalents are contemplated as circumstance may suggest or render expedient, but such are intended to cover the application or implementation without departing from the spirit or scope of the claims of the present technology.

In a case that no conflict occurs, the embodiments in the present disclosure and the features in the embodiments may be mutually combined. The foregoing descriptions are merely specific implementations of the present disclosure, but are not intended to limit the protection scope of the present disclosure. Any variation or replacement readily figured out by a person skilled in the art within the technical scope disclosed in the present disclosure shall fall within the protection scope of the present disclosure. Therefore, the protection scope of the present disclosure shall be subject to the protection scope of the claims.

## Claims

1. An optical fiber enclosure (102), **characterized in that**;
a base unit (106) defined by one or more walls (1110, 1112) having a burying end (1204) and a connection end (1202), wherein the burying end (1204) is an open end and is configured for subterranean placement beneath a land surface; and
a top casing (402) defined by one or more top walls (202-208) forming an open end (606) and a closed end (602), wherein the open end (606) of the top casing (402) is removably engaged to the connection end (1202) of the base unit (106), wherein the top casing (402) has an optical storage compartment (404), wherein the optical storage compartment (404) is devoid of apertures through the closed end (602), so as to preserve integrity of the optical storage compartment (404) against water ingress until submerged, while maintaining the open end (606) of the top casing (402).

2. The optical fiber enclosure (102) as claimed in claim 1, wherein a height of the optical fiber enclosure (102) above the land surface is less than 750 milli-meter (mm), so as to ensure sustained integrity of the optical storage compartment (404) against water intrusion until submerged to a height exceeding 25 mm above the land surface.

3. The optical fiber enclosure (102) as claimed in claim 1, wherein the base unit (106) includes a burying level indicator (110), wherein the burying level indicator (110) is configured as a visual indicator comprising one or more markings (112) indicating an optimal depth for burying the base unit (106).

4. The optical fiber enclosure (102) as claimed in claim 1, wherein the top casing (402) is an extruded component to provide resilience against external hydrostatic pressures when submerged.

5. The optical fiber enclosure (102) as claimed in claim 1, wherein the top casing (402) is defined by a wall thickness of 1 mm to 5 mm and made of a non-permeable thermoplastic material to ensure structural integrity under a submerged condition.

6. The optical fiber enclosure (102) as claimed in claim 1, wherein the closed end (602) of the top casing (402) comprises a top cover (108) integrally bonded with the one or more top walls (202-208) to establish a hermetic seal.

7. The optical fiber enclosure (102) as claimed in claim 6, wherein the top cover (108) has a peripheral channel (302) into which edges (220-226) of the one or more top walls (202-208) are engaged and bonded.

8. The optical fiber enclosure (102) as claimed in claim 1, wherein the base unit (106) comprises an extended region (814) configured to interlock with the top casing (402).

9. The optical fiber enclosure (102) as claimed in claim 1, wherein the optical fiber enclosure (102) comprises a peripheral sealing element (806), wherein the peripheral sealing element (806) comprises a compressed polymer engineered to exert upward force on the top casing (402) during decoupling from the base unit (106) to facilitate lifting of the top casing (402).

10. An optical fiber enclosure (102), **characterized in that**;
a base unit (106) defined by one or more walls (1110, 1112) having a burying end (1204) and a connection end (1202); and
a top casing (402) defined by one or more top walls (202-208) forming an open end (606) and a closed end (602),
wherein the optical storage compartment (404) is devoid of apertures through the closed end (602), so as to preserve integrity of the optical storage compartment (404) against water ingress until submerged, while maintaining the open end (606) of the top casing (402).

11. The optical fiber enclosure (102) as claimed in claim 11, wherein the burying end (1204) is an open end and is configured for subterranean placement beneath a land surface

12. The optical fiber enclosure (102) as claimed in claim 11, wherein the open end (606) of the top casing (402) is removably engaged to the connection end (1202) of the base unit (106), wherein the top casing (402) has an optical storage compartment (404).

13. The optical fiber enclosure (102) as claimed in claim 11, wherein a height of the optical fiber enclosure (102) above the land surface is less than 750 milli-meter (mm), so as to ensure sustained integrity of the optical storage compartment (404) against water intrusion until submerged to a height exceeding 25 mm above the land surface.

14. The optical fiber enclosure (102) as claimed in claim 11, wherein the base unit (106) includes a burying level indicator (110), wherein the burying level indicator (110) is configured as a visual indicator comprising one or more markings (112) indicating an optimal depth for burying the base unit (106).

15. The optical fiber enclosure (102) as claimed in claim 11, wherein the top casing (402) is an extruded component to provide resilience against external hydrostatic pressures when submerged.
